# EUROPÄISCHE PATENTSCHRIFT

(11) **EP 2 334 218 B1**
(45) Veröffentlichungstag und Bekanntmachung des Hinweises auf die Patenterteilung: **19.09.2012**
(21) Anmeldenummer: 09781175.6
(22) Anmeldetag: 28.07.2009
(51) Int. Cl.: A47J 43/044

(54) **KÜCHENGERÄT MIT MOTORDREHZAHLANZEIGE**
KITCHEN APPLIANCE WITH MOTOR SPEED DISPLAY
APPAREIL DE CUISINE AVEC AFFICHAGE DE LA VITESSE DE ROTATION DU MOTEUR

(30) Priorität: 01.08.2008 DE 102008040935
(43) Veröffentlichungstag der Anmeldung: 22.06.2011
(73) Patentinhaber: BSH Bosch und Siemens Hausgeräte GmbH, 81739 München (DE)
(72) Erfinder: GOLAVSEK, Samo, 3312 Prebold (SI); SEMEJA, Uros, 3327 Smartno ob Paki (SI); ZAGER, Igor, 3320 Velenje (SI); DANIJEL, Roman, 3312 Ljubno (SI)
(86) Internationale Anmeldenummer: PCT/EP2009/059726
(87) Internationale Veröffentlichungsnummer: WO 2010/012719

(56) Entgegenhaltungen:
- EP-A- 1 472 962
- JP-A- 7 039 464
- US-A1- 2007 201 306

## Beschreibung

### Hintergrund der Erfindung

Die Erfindung betrifft ein Küchengerät mit einem elektrischen Motor, dessen Drehzahl veränderbar ist, zum Antreiben eines Bearbeitungswerkzeugs, wobei das Küchengerät Erfassungsmittel zum erfassen der Drehzahl des Motors und mindestens ein von dem Erfassungsmittel ansteuerbares optisches Anzeigeelement zum Anzeigen einer Drehzahl des Motors umfasst. Die Erfindung betrifft außerdem ein Verfahren zur Anzeige der veränderbaren Drehzahl eines Motors, der in einem Küchengerät ein Bearbeitungswerkzeug antreibt.

### Stand der Technik

Aus dem Stand der Technik sind Stabmixer bekannt, bei denen ein Elektromotor das Messer eines an den Stabmixer ankuppelbaren Mixstabs rotierend antreibt, um Lebensmittel zu zerkleinern und zu durchmischen. Auf dem Mixstab sind Bedienmittel angebracht, mit denen sich der Motor ein- und ausschalten lässt und außerdem die Drehzahl des Motors einstellbar ist. Außerdem ist der Stabmixer mit einer LED-Matrixanzeige ausgestattet, die die aktuelle Drehzahl des Motors anzeigen kann. Dazu umfasst die Anzeige zahlreiche Anzeigeelemente, die im wesentlichen unabhängig voneinander an- oder ausgeschaltet werden können, um einen Balken oder eine Zahl zu ergeben, die die aktuelle Drehzahl des Motors repräsentiert.

An dem bekannten Stabmixer kann nachteilig sein, dass die Anzeige zu einer gut aufgelösten Darstellung der Motordrehzahl viele Anzeigeelemente aufweisen muss.

Des Weiteren offenbart die deutsche Offenlegungsschrift DE 10 2005 038 926 A1 einen Stabmixer, der mit einer LED-Ladezustandsanzeige ausgestattet ist, bei der das Licht einer auf einer Leiterplatte aufgelöteten Leuchtdiode vermittels eines Lichtleiters zu einem Anzeigefeld am Gehäuse des Stabmixers geleitet wird.

Die Offenlegungsschrift EP 1 472 962 A1 offenbart eine Küchenmaschine mit einem LEDbeleuchteten Drehzahlschalter. Eine rote und eine gelbe LED speisen Licht von entgegengesetzten Richtungen in einen Lichtleiter ein, der das Licht senkrecht zur Richtung der Einspeisung abstrahlt. Während im niedrigen Einstellbereich die gelbe LED stark aktiviert ist, die rote dagegen nur schwach, erfolgt mit zunehmend höheren Einstellungen eine Abschwächung der Aktivierung der gelben und eine Verstärkung der Aktivierung der roten LED.

Die Offenlegungsschrift US 2007/0201306 offenbart einen Mixer mit einer Motordrehzahlanzeige, die eine Reihe von LEDs, die ein- oder ausgeschaltet werden können, aufweist. Die Position eingeschalteter LEDs relativ zu einer Markierung soll dabei die Motorgeschwindigkeit anzeigen.

### Der Erfindung zugrundeliegende Aufgabe

Der Erfindung liegt die Aufgabe zugrunde, ein Küchengerät bereitzustellen, bei dem die Drehzahl eines Motors des Küchengeräts mit einer guten Auflösung darstellbar ist, das einfach und kostengünstig herstellbar ist, und das intuitiv handhabbar ist. Weiterhin liegt der Erfindung die Aufgabe zugrunde, ein verbessertes Verfahren zur Anzeige der veränderbaren Drehzahl eines Motors in einem Küchengerät bereitzustellen.

### Erfindungsgemäße Lösung

Die der Erfindung zugrunde liegende Aufgabe wird durch ein Küchengerät mit den Merkmalen des Anspruchs 1 gelöst. Außerdem wird die Aufgabe durch ein Verfahren mit den Merkmalen des Anspruchs 11 gelöst.

Die Intensität im Sinne der vorliegenden Erfindung ist die von einem Anwender des Küchengeräts wahrnehmbare Intensität. Wenn also z.B. die tatsächliche Intensität des Anzeigemittels mit einer hohen Frequenz, z.B. 50 Hz schwankt, so dass sie von einem Benutzer als eine mittlere Intensität wahrgenommen wird, so ist die Intensität im Sinne der vorliegenden Erfindung diese mittlere Intensität. Bei einem monochromen Anzeigeelement ist mit der Intensität im Sinne der vorliegenden Erfindung die Helligkeit des Anzeigeelements gemeint, bei einem polychromen Anzeigeelement die Helligkeit wenigstens einer der anzeigbaren Farben.

Die Erfindung kann sich vorteilhaft zunutze machen, dass Anwender von Küchengeräten häufig nicht an der absoluten Drehzahl des Motors interessiert sind, sondern nur an relativen Werten, z.B., ob durch das Betätigen eines Bedienmittels an dem Küchengerät die Drehzahl erhöht oder gesenkt wurde. Hierzu kann es ausreichend sein, die Veränderung der Intensität des Anzeigeelements zu beobachten.

Dadurch, dass mindestens eines, vorzugsweise alle der optischen Anzeigeelemente bei einer Motordrehzahl oberhalb der Obergrenze des dem jeweiligen Anzeigeelement zugeordneten Drehzahlbereichs die Intensität annehmen, die sie jeweils auch bei einer Motordrehzahl an der Obergrenze dieses Drehzahlbereichs annehmen, kann ein Benutzer intuitiv aus der Betrachtung des Anzeigeelements erkennen, dass sich die Motordrehzahl über dem dem Anzeigeelement zugeordneten Drehzahlbereichs befindet.

Mit der Erfindung ist vorteilhaft erreichbar, dass die Anzahl der zur gut aufgelösten Anzeige der Drehzahl erforderlichen Anzeigeelemente reduziert werden kann. Dadurch kann das Küchengerät einfacher konstruiert und preiswerter hergestellt werden. Außerdem kann vorteilhaft sein, dass mit der Erfindung eine besonders intuitive Art der Darstellung der Motordrehzahl gefunden wurde.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

Besonders vorzugsweise sind drei optische Anzeigeelemente vorgesehen. In einer bevorzugten Ausführung der Erfindung schließen die Drehzahlbereiche im Wesentlichen ohne Lücke aneinander an. Auf diese Weise können mehrere optische Anzeigeelemente mit den ihnen zugeordneten Drehzahlbereichen gemeinsam einen größeren Drehzahlbereich abdecken. Vorzugsweise wird der Drehzahlbereich, innerhalb dessen die Motordrehzahl veränderbar ist, mit dem/n optischen Anzeigeelementen zugeordneten Drehzahlbereich(en) abgedeckt.

Die Intensität mindestens eines, vorzugsweise aller optischen Anzeigeelemente variiert innerhalb des dem optischen Anzeigeelement jeweils zugeordneten Drehzahlbereichs vorzugsweise im Wesentlichen monoton, besonders vorzugsweise streng monoton, als Funktion der Motordrehzahl. Die Funktion ist vorzugsweise im Wesentlichen stetig, z.B. linear oder logarithmisch. In diesem Zusammenhang sind mit "im Wesentlichen stetig" auch Ausführungen der Erfindung umfasst, bei denen der Zusammenhang jedenfalls aus Sicht eines Benutzers stetig erscheint, auch wenn er etwa aus technischen Gründen in Wahrheit nicht stetig sondern z.B. mit vielen Stufen gestuft ist. Darüber hinaus sind grundsätzlich auch nicht stetige Funktionszusammenhänge denkbar, z.B. eine Stufenfunktion. Die Stufenfunktion umfasst mit Vorteil wenigstens zwei, vorzugsweise drei oder mehr Stufen mit einer von null verschiedenen Intensität. Bevorzugterweise ist die Intensität eine monoton steigende oder eine monoton fallende Funktion der Motordrehzahl, d.h. innerhalb des dem optischen Anzeigeelement jeweils zugeordneten Drehzahlbereichs weist eine Erhöhung bzw. eine Erniedrigung der Intensität auf eine Erhöhung der Drehzahl hin.

Vorzugsweise ist bei mehreren Anzeigelementen die Intensität, die sie bei einer Motordrehzahl oberhalb der Obergrenze des dem jeweiligen Anzeigeelement zugeordneten Drehzahlbereichs annehmen, bei allen Anzeigeelementen gleich. Vorzugsweise ist bei mehreren Anzeigelementen die Intensität, die sie bei einer Motordrehzahl an der Untergrenze des dem jeweiligen Anzeigeelement zugeordneten Drehzahlbereichs annehmen, bei allen Anzeigeelementen gleich. Vorzugsweise ist bei mehreren Anzeigelementen die Intensität, die sie bei einer Motordrehzahl unterhalb der Untergrenze des dem jeweiligen Anzeigeelement zugeordneten Drehzahlbereichs annehmen, bei allen Anzeigeelementen gleich. In einer alternativen Ausführung der Erfindung ist bei zwei Anzeigeelementen, vorzugsweise bei drei oder mehr Anzeigeelementen, die Intensität eines Anzeigeelements an der Obergrenze des ihm zugeordneten Drehzahlbereichs gleich der Intensität eines anderen Anzeigeelements, dem der daran nach oben anschließende Drehzahlbereich zugeordnet ist, an der Untergrenze dieses anschließenden Drehzahlbereichs.

Die Erfindung ist besonders vorteilhaft bei Küchengeräten einsetzbar, bei denen der Motor eine Vielzahl unterschiedlicher Drehzahlen annehmen kann. Vorzugsweise kann der Motor mindestens drei von null verschiedene Drehzahlen annehmen, besonders vorzugsweise mindestens sechs. Bei einem besonders bevorzugten Küchengerät ist die Drehzahl des Motors zumindest innerhalb eines vorbestimmten Drehzahlbereichs im Wesentlichen kontinuierlich veränderbar, z.B. mit einem dafür vorgesehenen Bedienmittel wie weiter unten ausgeführt. Auch hier umfasst "im Wesentlichen kontinuierlich" auch Ausführungen der Erfindung, bei denen die Motordrehzahl jedenfalls aus der Perspektive des Benutzers im Wesentlichen kontinuierlich veränderbar erscheint, auch wenn sie etwa aus technischen Gründen in Wahrheit nicht kontinuierlich sondern z.B. nur in vielen Stufen gestuft veränderbar ist.

In einer bevorzugten Ausführung der Erfindung umfasst das Küchengerät ein Bedienmittel zum Einstellen der Motordrehzahl. Das Bedienmittel kann z.B. ein am Gehäuse drehbar angeordnetes Rad sein. Vorzugsweise bewegt das Bedienmittel ein Potentiometer. Es sind aber auch Ausführungen der Erfindung denkbar, bei denen die Motordrehzahl z.B. mittels Tastendruck eingestellt wird, wobei eine Taste zu einer Erhöhung und eine andere Taste zu einer Erniedrigung der Drehzahl vorgesehen ist.

Das mindestens eine optische Anzeigemittel ist vorzugsweise ein Leuchtmittel. Geeignete Leuchtmittel sind z.B. eine anorganische (LED) oder eine organische (OLED) Leuchtdiode, vorzugsweise in SMD-Bauweise. Aber auch Glühlampen, Gasentladungslampen, insbesondere Glimmlampen, und andere Leuchtmittel kommen in Frage. Neben Leuchtmitteln können auch nicht leuchtende Anzeigemittel verwendet werden, z.B. ein Element einer Flüssigkeitskristallanzeige oder einer Anzeige auf Basis sog. elektronischer Tinte. Vorzugsweise ist bei einem Küchengerät, bei dem ein Leuchtmittel als optisches Anzeigeelement zum Einsatz kommt, die Intensität bei Motordrehzahlen unterhalb der Untergrenze des dem optischen Anzeigeelement zugeordneten Drehzahlbereichs im wesentlichen null, d.h. das Leuchtmittel ist im wesentlichen ausgeschaltet. Die Intensität bei Motordrehzahlen an der Untergrenze des dem optischen Anzeigeelement zugeordneten Drehzahlbereichs ist vorzugsweise größer als Null.

Bei einer bevorzugten Ausführung der Erfindung ist mindestens einem der Leuchtmittel, vorzugsweise jedem Leuchtmittel ein Lichtleiter zugeordnet, der das Licht des jeweiligen Leuchtmittels zu einem Anzeigefeld an einem Gehäuse des Küchengeräts leitet. Auf diese Art und Weise können die Leuchtmittel vorteilhaft weiter innen im Gehäuse des Küchengerätes angeordnet werden, insbesondere auf der Platine, z.B. in SMD-Technik, was die Konstruktion des Küchengeräts vereinfacht. Ein besonders bevorzugtes Küchengerät umfasst mindestens zwei Leuchtmittel als Anzeigeelemente, wobei diese Leuchtmittel auf unterschiedlichen Seiten einer elektronischen Leiterplatte angeordnet sind. Auch hierdurch lässt sich die Konstruktion des Küchengeräts vereinfachen und damit die Herstellungskosten senken.

In einer bevorzugten Ausführungsform der Erfindung kann der Motor ein Bearbeitungswerkzeug rotierend antreiben. Ein bevorzugtes Küchengerät ist ein Mixer, insbesondere ein Handmixer, z.B. ein Stabmixer. Als Bearbeitungswerkzeug kommt z.B. ein Rührbesen, ein Knethaken, ein Mixfuß oder ein Universalzerkleinerer in Frage. Natürlich umfasst die Erfindung auch Ausführungen, bei denen der Motor mehrere Bearbeitungswerkzeuge antreibt, z.B. ein Paar von Rührbesen oder Knethaken.

Die Drehzahl kann von dem Erfassungsmittel beispielsweise von zeitlichen Variationen der Leistungsaufnahme des Motors abgeleitet werden. Sie kann aber z.B. auch von einem Drehzahlmesser, der vorzugsweise an der Motorachse angeordnet ist, ermittelt werden oder aus der Stellung des Bedienmittels zum Einstellen der Motordrehzahl abgeleitet werden.

### Kurzbeschreibung der Figuren

Die Erfindung wird im Folgenden anhand schematischer Zeichnungen an einem Ausführungsbeispiel mit weiteren Einzelheiten näher erläutert.

Es zeigen:
- Fig. 1:: Ein erfindungsgemäßes Küchengerät in Form eines Stabmixers in Querschnittsansicht; und
- Fig. 2:: Der Stabmixer aus Fig. 1 in perspektivischer Ansicht von oben mit Blick auf das Anzeigefeld und die Bedienmittel.

### Ausführliche Beschreibung der Erfindung anhand eines Ausführungsbeispiels

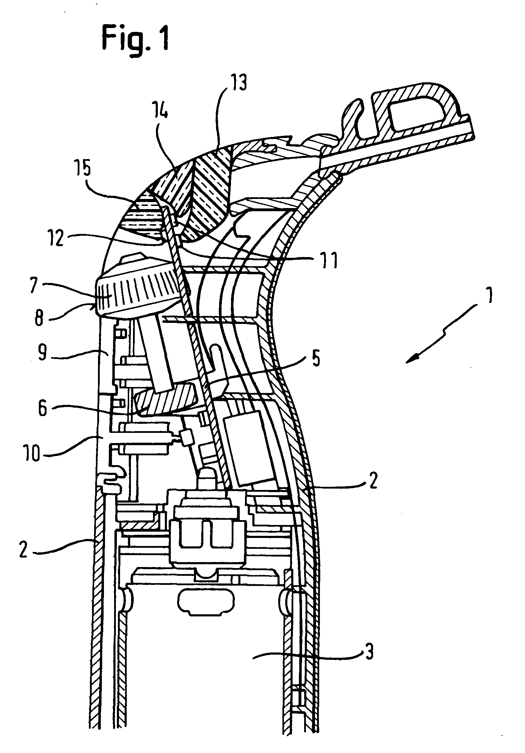

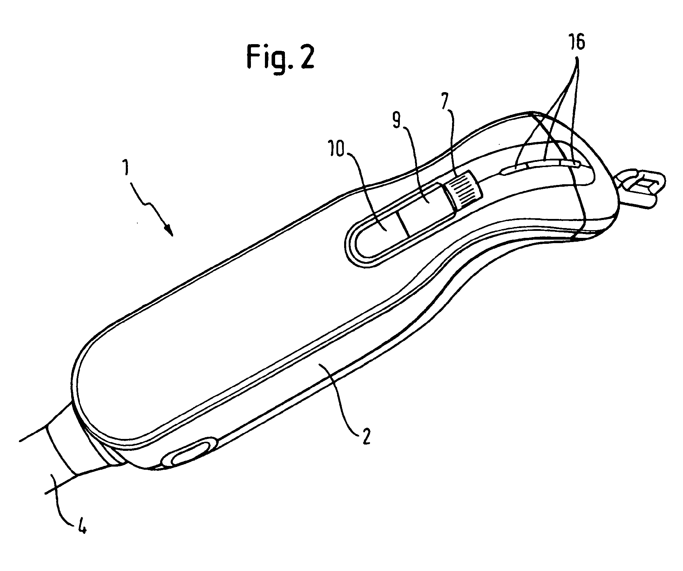

Der in Fig. 1 dargestellte Stabmixer 1 umfasst ein Gehäuse 2, in dem ein elektrischer Motor 3 untergebracht ist, der das Messer eines an den Stabmixer 1 ankuppelbaren Mixstabs 4 über eine nicht dargestellte Welle rotierend antreiben kann. Die Drehzahl des Motors 3 wird von einer auf einer Platine 5 angeordneten Elektronik gesteuert. Insbesondere ist auf der elektronischen Leiterplatte 5 ein Potentiometer 6 angeordnet, das ein Benutzer mittels eines Stellrads 7 verstellen kann, dessen Stirnseite 8 aus dem Gehäuse 2 herausreicht. Auf diese Art und Weise kann die Motordrehzahl innerhalb eines Bereiches zwischen 5 000 und 13 000 U/min im Wesentlichen kontinuierlich eingestellt werden. Mit einer Bedientaste 9 kann der Motor 3 ein- und ausgeschaltet werden, durch Betätigen einer Bedientaste 10 kann der Motor 3 vorübergehend auf seine maximale Drehzahl gebracht werden. Die Lage des Stellrads und der Bedientasten sind in Fig. 2 besonders gut erkennbar.

Weiter sind, wie nun wieder in Fig. 1 zu sehen, auf der Leiterplatte drei Leuchtdioden 11, 12 angeordnet, von denen sich zwei 11 auf einer Seite der Leiterplatte 5 und eine weitere 12 auf der anderen Seite der Leiterplatte 5 befinden. Von den Leuchtdioden 11, 12 führen Lichtleiter 13, 14 und 15 aus transparentem Kunststoff zu einem Anzeigefeld 16 des Stabmixers 1. Dabei grenzen die der ersten 12, zweiten und dritten 11 Leuchtdiode zugeordneten Bereiche des Anzeigefelds 16, die von den Lichtleitern 15, 14 und 13 gebildet werden, in dieser Reihenfolge aneinander. Die Leuchtdioden 11, 12 werden von einem Mikroprozessor gesteuert. Dabei wird die Leuchtstärke der Dioden 11, 12 durch schnelles an- und ausschalten geregelt, wobei das Tastverhältnis dieses so erzeugten Rechtecksignals die wahrgenommene Intensität bestimmt.

Bei der niedrigsten Drehzahl, also bei ca. 5 000 U/min. leuchtet die erste Leuchtdiode 12, der der Lichtleiter 15 zugeordnet ist, mit einer niedrigen Intensität und wird mit zunehmender Drehzahl heller, bis sie bei dem Ende des ersten Drehzahlbereichs ihr Maximum erreicht und bei höheren Drehzahlen auch diese maximale Intensität beibehält. Die anderen beiden Leuchtdioden 11 sind innerhalb des ersten Drehzahlbereichs ausgeschaltet.

Zu Anfang des nun anschließenden Drehzahlbereichs beginnt auch die zweite Leuchtdiode, der der Lichtleiter 14 zugeordnet ist, mit zunächst niedriger Intensität zu leuchten und wird ebenfalls zunehmend heller, bis sie am Ende des zweiten Drehzahlbereichs ihre maximale Helligkeit erreicht hat, bei der sie dann auch bei höheren Drehzahlen bleibt. Die dritte Leuchtdiode ist innerhalb des zweiten Drehzahlbereichs ausgeschaltet.

Zu Anfang des nun anschließenden dritten Drehzahlbereichs leuchtet auch die dritte Leuchtdiode, der der Lichtleiter 13 zugeordnet ist, zunächst schwach auf und nimmt in ihrer Intensität dann bis zur maximalen Intensität am Ende des dritten Drehzahlbereichs, also bei ca. 13 000 U/min zu.

Durch die Erfindung ist ein Küchengerät, bei dem die Drehzahl eines Motors mit einer guten Auflösung darstellbar ist, in vorteilhafter Weise einfach und kostengünstig herstellbar und intuitiv handhabbar.

### Bezugszeichen

- 1: Stabmixer
- 2: Gehäuse
- 3: Motor
- 4: Mixstab
- 5: Leiterplatte
- 6: Potentiometer
- 7: Stellrad
- 8: Stirnseite des Stellrads
- 9: Bedientaste zum Ein- und Ausschalten
- 10: Bedientaste für maximale Drehzahl
- 11: erste Leuchtdiode
- 12: zweite und dritte Leuchtdiode
- 13: der dritten Leuchtdiode zugeordneter Lichtleiter
- 14: der zweiten Leuchtdiode zugeordneter Lichtleiter
- 15: der ersten Leuchtdiode zugeordneter Lichtleiter
- 16: Anzeigefeld

## Patentansprüche

1. Küchengerät (1) mit einem elektrischen Motor (3), dessen Drehzahl veränderbar ist, zum Antreiben eines Bearbeitungswerkzeugs (4), wobei das Küchengerät (1) Erfassungsmittel zum erfassen der Drehzahl des Motors (3) und mehrere von dem Erfassungsmittel ansteuerbare optische Anzeigeelemente (11,12) zum Anzeigen einer Drehzahl des Motors (3) umfasst, **dadurch gekennzeichnet, dass** den optischen Anzeigeelementen (11,12) jeweils ein Drehzahlbereich des Motors (3) zugeordnet ist, dass die optischen Anzeigeelemente (11, 12) so von dem Erfassungsmittel ansteuerbar sind, dass eine von null verschiedene Intensität jedes optischen Anzeigeelements (11, 12) innerhalb des ihm zugeordneten Drehzahlbereiches als Funktion der Motordrehzahl variiert, und dass mindestens eines der optischen Anzeigeelemente (11, 12) bei einer Motordrehzahl oberhalb der Obergrenze des ihm zugeordneten Drehzahlbereichs die Intensität annimmt, die es auch bei einer Motordrehzahl an der Obergrenze dieses Drehzahlbereiches annimmt.

2. Küchengerät (1) nach Anspruch 1, **dadurch gekennzeichnet, dass** die Drehzahlbereiche im Wesentlichen ohne Lücke aneinander anschließen.

3. Küchengerät (1) nach einem der vorherigen Ansprüche, **dadurch gekennzeichnet, dass**
die Intensität mindestens eines der optischen Anzeigeelemente (11, 12) innerhalb des dem optischen Anzeigeelement (11, 12) jeweils zugeordneten Drehzahlbereichs im Wesentlichen monoton als Funktion der Motordrehzahl variiert.

4. Küchengerät (1) nach einem der vorherigen Ansprüche, **dadurch gekennzeichnet, dass**
die Drehzahl des Motors (3) zumindest innerhalb eines vorbestimmten Drehzahlbereichs im Wesentlichen kontinuierlich veränderbar ist.

5. Küchengerät (1) nach einem der vorherigen Ansprüche, **dadurch gekennzeichnet, dass**
das Küchengerät (1) ein Bedienmittel (7) zum Einstellen der Motordrehzahl umfasst.

6. Küchengerät (1) nach einem der vorherigen Ansprüche, **dadurch gekennzeichnet, dass**
mindestens ein optisches Anzeigeelement (11,12) ein Leuchtmittel ist.

7. Küchengerät (1) nach Anspruch 6, **dadurch gekennzeichnet, dass** wenigsten bei einem optischen Anzeigeelement (11, 12) die Intensität bei Motordrehzahlen unterhalb der Untergrenze des dem optisches Anzeigeelement (11, 12) zugeordneten Drehzahlbereichs im wesentlichen Null ist.

8. Küchengerät nach einem der Ansprüche 6 oder 7, **dadurch gekennzeichnet, dass** mindestens einem der Leuchtmittel ein Lichtleiter zugeordnet ist, der das Licht des Leuchtmittels zu einem Anzeigefeld an einem Gehäuse des Küchengeräts leitet.

9. Küchengerät (1) nach einem der Ansprüche 7 bis 8, **dadurch gekennzeichnet, dass**
das Küchengerät (1) mindestens zwei Leuchtmittel als Anzeigeelemente (11,12) umfasst und diese Leuchtmittel auf unterschiedlichen Seiten einer elektronischen Leiterplatte (5) angeordnet sind.

10. Küchengerät (1) nach einem der vorherigen Ansprüche, **dadurch gekennzeichnet, dass**
der Motor (3) das Bearbeitungswerkzeug (4) rotierend antreiben kann.

11. Verfahren zur Anzeige der veränderbaren Drehzahl eines Motors (3), der in einem Küchengerät (1) ein Bearbeitungswerkzeug (4) antreibt, **dadurch gekennzeichnet, dass** die von Null verschiedenen Intensitäten mehrerer optischer Anzeigeelemente (11, 12) des Küchengeräts (1) innerhalb der den optischen Anzeigeelementen (11, 12) jeweils zugeordneten Drehzahlbereiche als Funktion der Motordrehzahl variieren, und dass mindestens eines der optischen Anzeigenelemente (11, 12) bei einer Motordrehzahl oberhalb der Obergrenze des ihm zugeordneten Drehzahlbereichs die Intensität annimmt, die es auch bei einer Motordrehzahl an der Obergrenze dieses Drehzahlbereichs annimmt.

## Claims

1. Kitchen appliance (1) with an electric motor (3), the rotational speed of which is variable, for driving a processing tool (4), wherein the kitchen appliance (1) comprises detecting means for detecting the rotational speed of the motor (3) and a plurality of optical indicating elements (11, 12) which are activatable by the detecting means, for indicating a rotational speed of the motor (3), **characterised in that** a respective rotational speed range of the motor (3) is associated with each of the optical indicating elements (11, 12), that the optical indicating elements (11, 12) are so activatable by the detecting means that an intensity, which differs from zero, of each optical indicating element (11, 12) varies within the rotational speed range, which is associated therewith, as a function of the motor rotational speed and that at least one of the optical indicating elements (11, 12) in a case of a motor rotational speed above the upper limit of the rotational speed range associated therewith adopts the intensity which it also adopts in the case of a motor rotational speed at the upper limit of this rotational speed range.

2. Kitchen appliance (1) according to claim 1, **characterised in that** the rotational speed ranges adjoin one another substantially without gaps.

3. Kitchen appliance (1) according to one of the preceding claims, **characterised in that** the intensity of at least one of the optical indicating elements (11, 12) varies substantially monotonously as a function of the motor rotational speed within the rotational speed range respectively associated with the optical indicating element (11, 12).

4. Kitchen appliance (1) according to any one of the preceding claims, **characterised in that** the rotational speed of the motor (3) is substantially continuously variable at least within a predetermined rotational speed range.

5. Kitchen appliance (1) according to any one of the preceding claims, **characterised in that** the kitchen appliance (1) comprises a control means (7) for setting the motor rotational speed.

6. Kitchen appliance (1) according to any one of the preceding claims, **characterised in that** at least one optical indicating means (11, 12) is a lighting means.

7. Kitchen appliance (1) according to claim 6, **characterised in that** at least in the case of one optical indicating element (11, 12) the intensity at rotational speeds below the lower limit of the rotational speed range associated with the optical indicating element (11, 12) is substantially zero.

8. Kitchen appliance according to one of claims 6 and 7, **characterised in that** associated with at least one of the lighting means is in optical waveguide which conducts the light of the lighting means to a display field at a housing of the kitchen appliance.

9. Kitchen appliance (1) according to one of claims 7 and 8, **characterised in that** the kitchen appliance (1) comprises at least two lighting means as indicating elements (11, 12) and these lighting means are arranged on different sides of an electronic circuitboard (5).

10. Kitchen appliance (1) according to any one of the preceding claims, **characterised in that** the motor (3) can rotationally drive the processing tool (4).

11. Method of indicating the variable rotational speed of a motor (3), which drives a processing tool (4) in a kitchen appliance (1), **characterised in that** the intensities, which differ from zero, of a plurality of optical indicating elements (11, 12) of the kitchen appliance (1) vary within the rotational speed ranges, which are respectively associated with the optical indicating elements (11, 12), as a function of the motor rotational speed and that at least one of the optical indicating elements (11, 12) in the case of a motor rotational speed above the upper limit of the rotational speed range associated therewith adopts the intensity which it also adopts in the case of a motor rotational speed at the upper limit of this rotational speed range.

## Revendications

1. Appareil de cuisine (1) muni d'un moteur électrique (3) dont la vitesse de rotation est modifiable, destiné à entraîner un outil de transformation (4), l'appareil de cuisine (1) comprenant des moyens de saisie pour saisir la vitesse de rotation du moteur (3) et plusieurs éléments d'affichage optiques (11, 12) commandables par le moyen de saisie, destinés à afficher une vitesse de rotation du moteur (3), **caractérisé en ce qu'**une gamme de vitesse de rotation du moteur (3) est respectivement attribuée aux éléments d'affichage optiques (11, 12), **en ce que** les éléments d'affichage optiques (11, 12) sont commandables par le moyen de saisie de manière à ce qu'une intensité différente de zéro de chaque élément d'affichage optique (11, 12) varie, en tant que fonction de la vitesse de rotation du moteur, à l'intérieur de la gamme de vitesse de rotation qui lui est attribuée, et **en ce qu'**au moins un des éléments d'affichage optiques (11, 12), lors d'une vitesse de rotation du moteur située au-dessus de la limite supérieure de la gamme de vitesse de rotation qui lui est attribuée, prend l'intensité qu'il prend également lors d'une vitesse de rotation du moteur située à la limite supérieure de cette gamme de vitesse de rotation.

2. Appareil de cuisine (1) selon la revendication 1, **caractérisé en ce que** les gammes de vitesse de rotation sont essentiellement liées l'une à l'autre sans intervalle.

3. Appareil de cuisine (1) selon l'une quelconque des revendications précédentes, **caractérisé en ce que**
l'intensité au moins de l'un des éléments d'affichage optiques (11, 12) varie essentiellement de manière monotone, en tant que fonction de la vitesse de rotation du moteur, à l'intérieur de la gamme de vitesse de rotation respectivement attribuée à l'élément d'affichage optique (11, 12).

4. Appareil de cuisine (1) selon l'une quelconque des revendications précédentes, **caractérisé en ce que**
la vitesse de rotation du moteur (3) est essentiellement modifiable en continu au moins à l'intérieur d'une gamme de vitesse de rotation prédéterminée.

5. Appareil de cuisine (1) selon l'une quelconque des revendications précédentes, **caractérisé en ce que**
l'appareil de cuisine (1) comprend un moyen de commande (7) destiné à régler la vitesse de rotation du moteur.

6. Appareil de cuisine (1) selon l'une quelconque des revendications précédentes, **caractérisé en ce qu'**
au moins un élément d'affichage optique (11, 12) est une ampoule.

7. Appareil de cuisine (1) selon la revendication 6, **caractérisé en ce qu'** au moins dans un élément d'affichage optique (11, 12), l'intensité est essentiellement nulle en cas de vitesses de rotation du moteur situées en dessous de la limite inférieure de la gamme de vitesse de rotation attribuée à l'élément d'affichage optique (11,12).

8. Appareil de cuisine (1) selon l'une quelconque des revendications 6 ou 7, **caractérisé en ce qu'**
une fibre optique est attribuée à au moins une des ampoules, laquelle fibre optique conduit la lumière de l'ampoule vers un champ d'affichage sur un boîtier de l'appareil de cuisine.

9. Appareil de cuisine (1) selon l'une quelconque des revendications 7 à 8, **caractérisé en ce que**
l'appareil de cuisine (1) comprend au moins deux ampoules en tant qu'éléments d'affichage (11, 12) et **en ce que** ces ampoules sont disposées sur différents côtés d'une plaquette électronique (5) à circuit imprimé.

10. Appareil de cuisine (1) selon l'une quelconque des revendications précédentes, **caractérisé en ce que**
le moteur (3) peut entraîner l'outil de transformation (4) de manière rotative.

11. Procédé d'affichage de la vitesse de rotation modifiable d'un moteur (3) qui entraîne un outil de transformation (4) dans un appareil de cuisine (1), **caractérisé en ce que** les intensités différentes de zéro de plusieurs éléments d'affichage optiques (11, 12) de l'appareil de cuisine (1) varient, en tant que fonction de la vitesse de rotation du moteur, à l'intérieur des gammes de vitesse de rotation respectivement attribuées aux élément d'affichage (11, 12), et **en ce qu'**au moins un des éléments d'affichage optiques (11, 12), lors d'une vitesse de rotation du moteur située au-dessus de la limite supérieure de la gamme de vitesse de rotation qui lui est attribuée, prend l'intensité qu'il prend également lors d'une vitesse de rotation du moteur située à la limite supérieure de cette gamme de vitesse de rotation.
